# EUROPEAN PATENT APPLICATION

(11) **EP 4 530 792 A1**
(43) Date of publication of application: **02.04.2025**
(21) Application number: 24201385.2
(22) Date of filing: 19.09.2024
(51) Int. Cl.: G06F 1/10, G06F 1/12, G06F 21/55, G06F 21/57, G06F 21/75, G06F 21/87

(54) **CLOCK GENERATION WITH GLITCH DETECTION AND HANDLING**

(30) Priority: 29.09.2023 IN 202341065621
(71) Applicant: NXP USA, Inc., Austin, TX 78735 (US)
(72) Inventor: Mahatme, Nihaar N., 5656AG Eindhoven (NL); Jagannathan, Srikanth, 5656AG Eindhoven (NL); Singh, Akhilesh Kumar, 5656AG Eindhoven (NL); Agrawal, Girraj Kumar, 5656AG Eindhoven (NL)
(74) Representative: Miles, John Richard

(57) **Abstract**

In a system on a chip (SoC), clock selection circuitry provides a selected one of a first or second clock signal as an output clock based on at least one of a first flag and a second flag. This output clock is provided as a reference clock to one or more phase locked loops (PLLs) of the SoC. The SoC includes a first clock path which receives a first oscillating signal from a first clock source external to the SoC to generate the first clock signal, and a second clock path which receives a second oscillating signal from a second clock source external to the SoC to generate the second clock signal. A first glitch monitor asserts the first flag when a glitch is detected in the first oscillating signal, and a second glitch monitor configured asserts the second flag when a glitch is detected in the second oscillating signal.

## Description

### Field

This disclosure relates generally to clock generation, and more specifically, to clock generation with glitch detection and handling.

### Related Art

Typically, clocks within a system on a chip (SoC) are generated from an external crystal (XTAL). The external XTAL is typically located on a printed circuit board (PCB) to which the SoC is attached and is therefore easily accessible. Tampering with the clock signal from the external XTAL is a common approach to disrupt the SoC boot process in an attempt to place the part in an unsecure mode of operation which risks unauthorized access to sensitive information. For example, introducing clock glitches through pin tampering or electromagnetic exposure can be used to tamper with the clocks signal such as by manipulating its clock frequency. Also, failures in the external XTAL or in the board connections of the external XTAL to the SoC can cause dangerous safety issues. Therefore, a need exists for an improved clock generation circuit which protects an SoC in the event of clock tampering attacks or safety failures.

### Brief Description of the Drawings

The present invention is illustrated by way of example and is not limited by the accompanying figures, in which like references indicate similar elements. Elements in the figures are illustrated for simplicity and clarity and have not necessarily been drawn to scale.
FIG. 1 illustrates, in diagrammatic form, a system having a packaged SoC and an external crystal both attached to a printed circuit board (PCB), in which the packaged device includes an SoC and a hidden crystal, in accordance with one embodiment of the present invention.
FIG. 2 illustrates, in block diagram form, a clock generation circuit within the SoC of FIG. 1 coupled to the external crystal and the hidden crystal, in accordance with one embodiment of the present invention.
FIG. 3 illustrates, in diagrammatic form, a state machine for a boot process for the SoC of FIG. 1, in accordance with one embodiment of the presents invention.
FIGs. 4 and 5 illustrate, in diagrammatic form, systems having a packaged SoC, a PCB, a hidden crystal, and external crystal, in accordance to embodiments of the present invention.

### Detailed Description

In one aspect, a packaged SoC includes a clock generation circuit and an additional hidden crystal, in which the hidden crystal is used along with an external crystal located outside the packaged SoC by the clock generation circuit. The hidden crystal as well as the external crystal can be referred to as the hidden XTAL and the external XTAL, respectively, and each is capable of providing a clock source for internal clocks of the SoC generated by the clock generation circuit. In one embodiment, the hidden XTAL is hidden such that it cannot be visually inspected in the packaged SoC without destruction of the package. For example, it can be buried within the package substrate of the packaged SoC. This provides a safe and protected backup clock source in the case tampering is detected with the external XTAL. In one embodiment, the clock generation circuit performs a dynamic selection of the proper clock source (the hidden XTAL or the external XTAL) based on whether a tamper attack or clock malfunction is detected. For example, this selection may be performed based on outputs of a respective glitch monitor circuit coupled to each of the hidden XTAL and the external XTAL. The ability to select the hidden XTAL as the clock source when there is a security event or safety failure with the external XTAL allows for a smooth recovery from clock disturbances or instabilities.

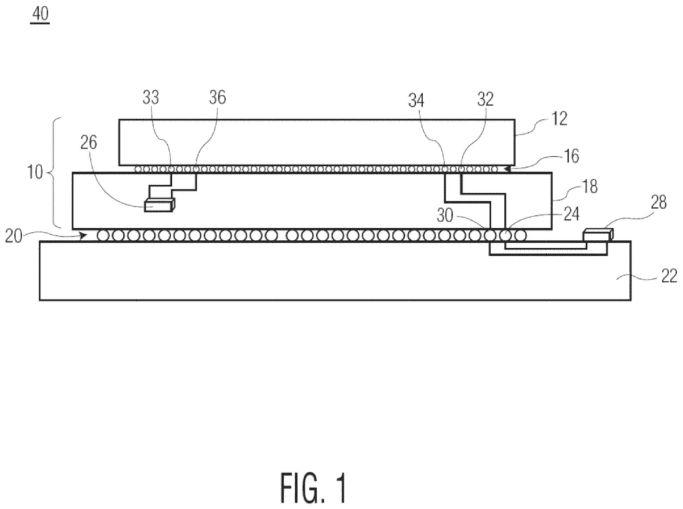

FIG. 1 illustrates a system 40 having a packaged SoC 10 and an external XTAL 28 attached to a PCB 22, in accordance with one embodiment of the present invention. Note that SoC 10 may also be referred to as a system in a chip (SIP). Packaged SoC 10 includes an SoC 12 mounted on a package substrate 18 and a hidden XTAL 26 buried within package substrate 18. Hidden XTAL 26 is buried within package substrate 18 such that it is not visible by visual inspection from any of the surfaces of package substrate 18. Note that SoC 12 can also be referred to as a die or as an integrated circuit. Packaged SoC 10 can be implemented as any type of package. For example, in the illustrated embodiment, SoC 12 is attached to package substrate 18 via electrical connections 16, which may correspond to, for example, solder bumps of a ball grid array (BGA). In one embodiment, SoC 12 can be attached in a flip chip configuration. In alternate embodiments, electrical connections 16 between SoC 12 and package substrate 18 can be implemented with wire bonds instead of solder bumps. Signals between terminals of hidden XTAL 26 and circuitry within SoC 12 can be routed via metal lines within package substrate 18 and electrical connections 38 and 36. Note that the terminals of hidden XTAL 26 can be routed via any two electrical connections (e.g. solder bumps) of electrical connections 16, as needed.

Packaged SoC 10 as well as external XTAL 28 are mounted onto PCB 22. Electrical connections from SoC 12 are routed through package substrate 18 using any number of routing layers (also referred to as interconnect layers) to electrical interconnects 20. In the illustrated embodiment, electrical interconnects 20 are implemented as solder balls. PCB 22 routes signals from packaged SoC 10 as needed. For example, XTAL 28 is mounted on PCB 22, next to (e.g. laterally adjacent to) packaged substrate 10. Signals between terminals of XTAL 28 and circuitry within SoC 12 can be routed via metal lines in PCB 22, solder balls 20 and 24, respectively, metal lines within package substrate 18, and electrical connections 34 and 32. Note that the terminals of XTAL 28 can be routed via any two electrical connections (e.g. solder balls) of electrical connections 20 and any two electrical connections (e.g. solder bumps) of electrical connections 16, as needed.

In the examples herein, XTALs 26 and 28 correspond to clock sources which are implemented as crystals. However, in alternate embodiments, other clock sources (e.g. different types of oscillators or oscillator circuits) may be used in place of either external XTAL 28 or hidden XTAL 26 or both XTALs 28 and 26. In one embodiment, XTAL 26 can be implemented with a different type of clock source than XTAL 28. Regardless of the clock source used for hidden XTAL 26, the hidden clock source should be located where it not easily accessible, such as buried or embedded somewhere within package substate 18. If buried within package substate 18, even if it is known there is a hidden clock source buried in the substrate, the packaged SoC would be destroyed in the process of accessing the hidden clock source, thus preventing any further access to the SoC.

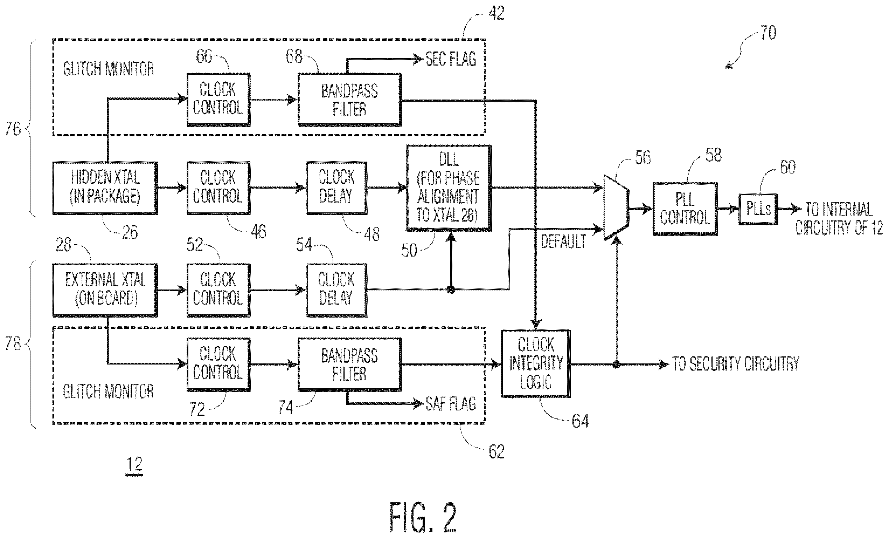

FIG. 2 illustrates a clock generation circuit 70 within SoC 12 which is coupled to each of hidden XTAL 26 and external XTAL 28 (both of which are external to SoC 12). Clock generation circuit 70 includes clock control circuits 46 and 52, clock delays 48 and 54, a delay locked loop (DLL) 50, a multiplexer (MUX) 56, a phase locked loop (PLL) control circuit 58, PLLs 60 (which includes one or more PLLs), glitch monitors 42 and 62, and clock integrity logic 64. An output terminal of hidden XTAL 26 is coupled to each of clock control circuit 66 of glitch monitor 42 and clock control circuit 46. An output of clock control 66 is coupled to an input of bandpass filter 68, a first output of bandpass filter 68 is provided to clock integrity logic 64 and a second output of bandpass filter 68 provides a first fault flag (SEC flag), which, when asserted, indicates occurrence of a fault. An output terminal of external XTAL 28 is coupled to each of clock control circuit 72 of glitch monitor 62 and clock control circuit 52. An output of clock control circuit 72 is coupled to an input of bandpass filter 74, a first output of bandpass filter 74 is provided to clock integrity logic 64, and a second output of bandpass filter 64 provides a second fault flag (SAF flag), which, when asserted, indicates occurrence of a fault. The SAF and SEC flags may also be provided to clock integrity logic 64, and an output of clock integrity logic 64 is coupled to a control input of MUX 56 and can also be provided to security circuitry within SoC 12.

In one embodiment, the SEC flag corresponds to a fault caused by the hidden XTAL while SAF flag corresponds to a fault caused by the external XTAL. In one embodiment, assertion of the SEC flag may indicate a security related fault due to a security event such as, for example, tampering with the external XTAL, and assertion of the SAF flag corresponds to either a safety related fault due to a security event or a safety issue such as, for example, damage to the clock source, failure in the PCB wiring, etc..

Still referring to FIG. 2, an output of external XTAL 28 provides a first oscillating signal as a clock signal to clock control circuit 52 which amplifies the clock signal and provides the amplified clock signal to clock delay 54 which adds a predetermined delay to the amplified clock signal. The amplified and delayed clock signal from clock delay circuit 54 is provided as a first clock signal to DLL 50. An output of hidden XTAL 26 provides a second oscillating signal which is processed analogously to the first oscillating signal. For example, the second oscillating signal is provided as a clock signal to control circuit 46 which amplifies the clock signal and provides the amplified clock signal to clock delay 48 which adds a predetermined delay to the amplified clock signal (in which, this delay, can be matched to, i.e., be the same as, the delay applied by clock delay circuit 54). The amplified and delayed clock signal from clock delay circuit 48 is provided as a second clock signal to DLL 50. DLL 50 can be implemented with any known DLL circuit and is configured to lock the second clock signal in time to the first clock signal, such that the first and second clock signals are phased aligned, with aligned rising edges and aligned falling edges. That is, each rising edge of the locked second clock signal occurs at the same time (or at most within an acceptable margin) of a corresponding matching rising edge of the first clock signal, and each falling edge of the locked second clock signal occurs at the same time (or within at most an within an acceptable margin) of a corresponding matching falling edge of the first clock signal. In this manner, the first and second clock signals match, in which the first clock signal, generated from external XTAL 28, is provided as a first data input to MUX 56 and the second clock signal, generated from hidden XTAL 26, is provided as a second data input to MUX 56.

Based on the control input received from clock integrity logic 64, MUX 56 provides one of the first and second clock signals received at its data inputs as an output clock signal to PLL control 58. PLL control 58 provides clock signals, each based on the output clock signal, to each of any number of PLLs 60, in which each PLL of PLLs 60 can generate a clock to a corresponding clock domain of internal circuitry of SoC 12. Note that any known circuitry may be used to implement PLL control 58 and PLLs 60.

Note that, in the illustrated embodiment, clock generation circuit 70 implements two separate clock paths which feed into MUX 56. A first clock path 78 is driven by XTAL 28 (e.g. receives an input oscillating signal from XTAL 28) and provides the first clock signal to MUX 56, and a second clock path 76 is driven by XTAL 26 (e.g. receives an input oscillating signal from XTAL 26) and provides the second clock signal, via DLL 50, to MUX 56. Clock path 78 is therefore coupled to XTAL 28 and includes glitch monitor 62, clock control 52, and clock delay 54, while clock path 76 is coupled to XTAL 26 and includes glitch monitor 42, clock control 66, clock delay 48, and DLL 50. Clock integrity logic receives outputs from both clock paths to control MUX 56. Note also that each of XTAL 28 and XTAL 26 drives a corresponding clock path which is capable of outputting an output clock signal used by PLL control 58 and PLLs 60. In this manner, the clock sources XTAL 28 and XTAL 26 can be used interchangeably to drive PLL control 58 and thus PLLs 60. That is, clock path 78 does not use XTAL 26 to simply generate a reference clock for clock path 78, and clock path 76 does not use XTAL 28 to simply generate a reference clock for clock path 76. Further, although not illustrated, each clock path may also receive a reference clock, as needed, in addition to the input from the XTAL to implement the clock path.

In operation, one of the two clock signals at the inputs of MUX 56 is selected to provide the output clock to PLL control 58. If, however, the glitch monitor corresponding to the selected one of the two clock signals (e.g. glitch monitor 62 for the first clock signal or glitch monitor 42 for the second clock signal) detects a fault (e.g. a glitch) in its corresponding clock signal and asserts its corresponding fault indicator (e.g. SAF flag or SEC flag), clock integrity logic 64 causes MUX 56 to select the other of the two clock signals as the input clock to PLL control 58. Since DLL 50 ensures that both the first and second clocks are aligned, this switch from one clock to the other clock is performed smoothly, without affecting operation of PLL control 58 or any of the clocks generated by PLLs 60. That is, PLL control 58 and PLLs 60 do not detect any phase difference on its input clock when MUX 56 switches clocks. In one embodiment, the delay applied by the clock delay units 48 and 54 corresponds to the time consumed by clock integrity logic 64 to make its decision and properly set the control input of MUX 56. In this manner, there is sufficient time to react to a glitch and ensure a safe clock, prior to the glitch reaching MUX 56.

In one embodiment, the first clock signal at the output of clock delay circuit 54, generated based on external XTAL 28, is selected by MUX 56 as the default clock to be provided as the output clock signal to PLL control 58. However, if glitch monitor 62 detects a fault in the first clock signal, the SAF flag is asserted and clock integrity logic 64 causes MUX 56 to switch to the alternate clock (corresponding to the second clock signal generated based on hidden XTAL 26). Since the alternate clock is generated based on the hidden clock source, the alternate clock is ensured to be a clean and uncorrupted clock source.

Note that MUX 56 may also be referred to as a clock selection circuit, since it selects between the first and second clock signals to provide as its output. However, alternate embodiments may use different circuitry to implement the selection circuit instead of a MUX.

In the illustrated embodiment, the frequencies of the crystals are known, however, any glitching on the output from a crystal causes a change in frequency of the corresponding clock signal. Therefore, glitch monitors 62 and 42 each include a bandpass filter which attenuates the out of band frequencies that are higher or lower than the passband (i.e. the frequency band of interest) so as to only pass those frequencies within the passband. During the attenuation, the bandpass filters also set the corresponding flag accordingly (e.g. the SAF or SEC flag).

In one embodiment, each of the XTALs 28 and 26 is a 24MHz crystal, and bandpass filters 74 and 68 are implemented so as to attenuate more than +/- 10% of the crystal frequency. Therefore, the passband of each bandpass filter includes a range of frequencies around the expected frequency of the clock source (e.g. 24MHz-10% to 14 MHz+10%). Glitch monitors 62 and 42 determine a fault occurs in their corresponding clock signal if a deviation from the frequency band of interest is detected. Therefore, in each glitch monitor, the bandpass filter is applied to the amplified clock signal received from the clock control circuit of the glitch monitor. When the input clock signal deviates to outside the band of interest (e.g. 24MHz +/- 10%), the corresponding flag is asserted.

In one embodiment, the coefficient values of the bandpass filters are determined as a result of characterization performed during production testing of SoC 12 (which may also be referred to as a training period for the filter). For example, during the production test, the ideal frequency is applied to the filter with no glitching present, and the intermediate (coefficient) values are stored in storage circuitry within SoC 12. Similarly, higher and lower frequency signals (e.g. those at +/- 10%) are applied to calculate the expected intermediate values, and these are also stored in the storage circuitry of SoC 12. In this manner, during operation of SoC 12 in the field, when the filter receives a frequency that is outside the band of interest, the calculated filter coefficient values do not match the expected values (which were determined and stored during the production test characterization) and thus indicate that the input clock signal from the clock source is outside the expected range, and the corresponding flag is set (i.e. asserted).

In one embodiment, the bandpass filters can be implemented with any number of stages, in which the higher the number of stages, the higher the resolution of the glitch detection (such that glitches with smaller widths can be detected). That is, the greater the number of stages, the faster the glitch frequency that can be detected. In one embodiment, each stage may be implemented with a plurality of flip flops. Note that in alternate embodiments, any type of glitch monitor can be used. For example, any kind of clock anomaly detection in place of or in addition to a bandpass filter can be used by the glitch monitors, which can be implemented with any type of circuitry.

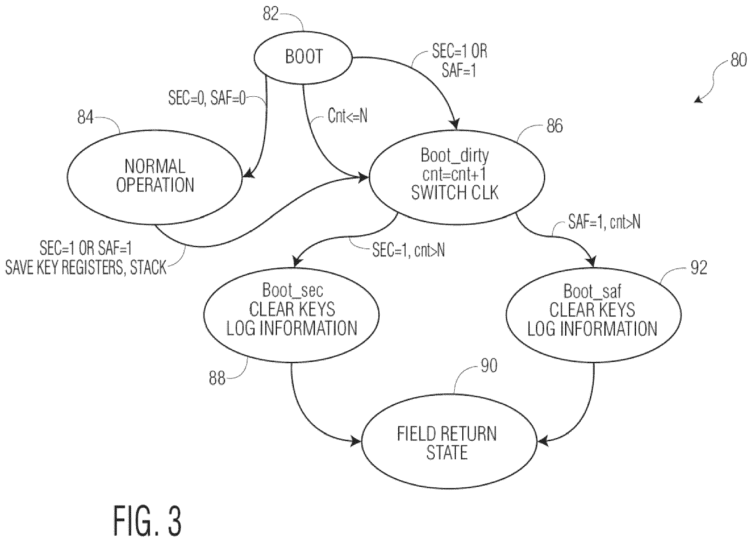

FIG. 3 illustrates a state machine 80 which can be implemented within clock integrity logic 64 to control bootup of SoC 12 using the SEC and SAF flags, in accordance with one embodiment of the present invention. State machine 80 can be implemented as known in the art. State machine 80 may also be referred to as control circuitry which can include any circuitry used to implement the functionality of the state machine. At state 82, a boot is initiated in which MUX 56 provides a default clock signal (e.g. the first clock signal generated from external XTAL 28) and a count value (CNT) is initiated to zero. During the boot, if neither the SEC nor SAF flags are asserted, no clock fault is indicated and state machine 80 enters normal operation at state 84. If, however, during boot, either the SEC or SAF flag is asserted, state machine 80 enters state 86, corresponding to a dirty boot (in which CNT is incremented by one and the clock may be switched). In the case that the SEC flag is asserted, the control input of MUX 56 is toggled so as to switch clocks and provide an alternate clock signal (e.g. the second clock signal generated from hidden XTAL 26). In the case that the SAF flag is asserted, state machine 80 remains with the initial clock signal (e.g. the first clock signal generated from external XTAL 28). Note that during normal operation at state 84, if either the SAF or SEC flag is asserted, any key registers are saved, the current state of SoC 12 is saved (e.g. the stack is saved), and state machine 80 transitions to the dirty boot state 86 for a dirty boot in which the CNT value is incremented and the clock may be switched.

If, during the dirty boot state 86, CNT is still less than a maximum number (N) of boot attempts, state machine 80 returns to boot state 82 for a reboot (in which the default clock is again provided by MUX 56). (Note that the number N can be any integer greater or equal to zero.) However, if, during the dirty boot state 86, CNT has surpassed N, another reboot is not attempted, and instead, a particular boot mode is entered based on which flag is set. If CNT > N and SEC is asserted, state machine 80 transitions to state 88 to enter a first boot mode (boot_sec) in which a first protocol is performed to protect the SoC. For example, the first protocol may include any desired series of actions to be taken after a suspected security violation. This may include clearing any security keys, and logging information about the clock fault. If CNT > N and SAF is asserted, state machine 80 transitions to state 92 to enter a second boot mode (boot_saf) in which a second protocol is performed to protect the SoC. The second protocol may include any desired series of actions to be taken after a suspected safety violation or suspected security violation. This may include the same actions taken in the first boot mode, such as clearing any security keys and logging information about the clock fault. Alternatively, the first and second boot modes may include the different actions.

The boot modes of states 88 and 92 can be used to limit functionality to ensure that secure information is not breached or that SoC 12 properly enters a safe state. Other embodiments may perform different responses in response to receiving a clock fault and having exceeded a maximum number of reboot attempts, such as completely shut down. After either state 88 or 92, state machine 80 transitions to a field return state 90 in which, for example, the part (SoC 12) can be returned for repair or replacement.

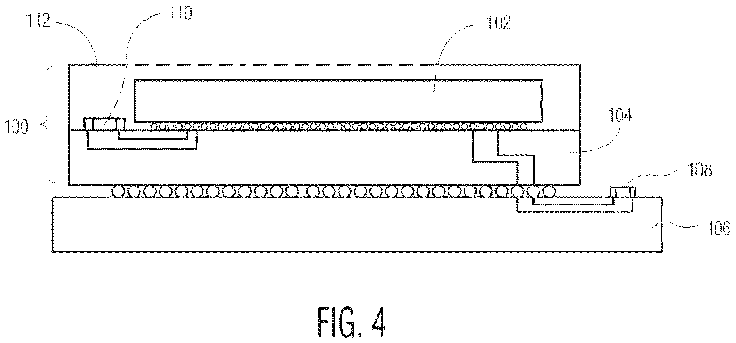

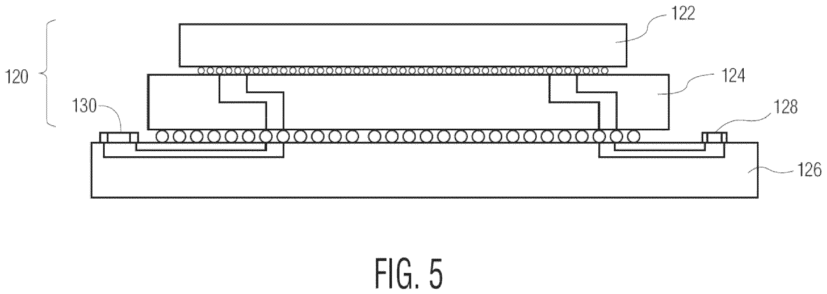

FIGs. 4 and 5 illustrate other locations where the hidden XTAL can be hidden within a system or a packaged SoC, in accordance with embodiments of the present invention. For example, FIG. 4 illustrates a system having a packaged SoC 100 mounted onto a PCB 106, in which an external XTAL 108 is located on a surface of PCB 106, similar to XTAL 28 of FIG. 1. Packaged SoC 100 includes a die 102 mounted (in any way) onto a package substrate 104. Packaged SoC 100 includes a hidden XTAL 110 mounted onto a surface of package substrate 104, next to die 102 (i.e. laterally adjacent to die 102). A mold compound 112 formed on the surface of packaged substrate 104 surrounds die 102 as well as hidden XTAL 112 such that XTAL 112 is not visible from the outside of packaged SoC 100. While not as hidden as hidden XTAL 26 which is buried within package substrate 18, XTAL 110 still can not be easily reached (and would likely required destruction of packaged SoC 100 to do so).

FIG. 5 illustrates a system having a packaged SoC 120 mounted onto a PCB 126, in which a first XTAL 128 and a second XTAL 130 are mounted onto a surface of PCB 126. Packaged SoC 120 includes a die 122 mounted (in any way) onto a package substrate 124. In this example, while neither XTAL is hidden as were XTAL 26 and XTAL 110, in the embodiment of FIG. 5, one of XTAL 130 and 128 can be used in a manner similar to external XTAL 28 while the other one of XTAL 130 and 128 can be used in a manner similar to hidden XTAL 26. That is, one of the two XTALs can generate the default clock and the other the alternate clock. While not as hidden as hidden XTAL 26 or XTAL 110, the use of a second XTAL on PCB 126 would provide redundant operation when a fault is detected on the clock currently in use.

Therefore, by now it can be appreciated how a clock source as well as a secondary clock source can be used to provide a seamless and safe transition upon a security event or physical failure in the clock source. In one embodiment, the clock source is external to a packaged SoC (and may be considered a primary or default clock source) while the secondary clock source is hidden (e.g., buried within the package substrate of the packaged SoC). With the secondary clock source being hidden, if a security threat is detected, such as due to tampering or causing intentional glitching on the external clock source, operation of the SoC can continue with the use of this hidden clock source. The hidden clock source provides a clean and uncompromised clock, which is aligned to the external clock source, such that PLLs or other clock generators within the SoC using the clock source is not affected by the change in clock source. In one embodiment, each clock source is monitored by a glitch monitor to determine the existence of any glitches, and upon the detection of any glitches, the clock source can be switched to the secondary (e.g. alternate) clock source.

The terms "assert" or "set" and "negate" (or "deassert" or "clear") are used herein when referring to the rendering of a signal, status bit, or similar apparatus into its logically true or logically false state, respectively. If the logically true state is a logic level one, the logically false state is a logic level zero. And if the logically true state is a logic level zero, the logically false state is a logic level one.

Each signal described herein may be designed as positive or negative logic, where negative logic can be indicated by a bar over the signal name or an asterisk (*) following the name. In the case of a negative logic signal, the signal is active low where the logically true state corresponds to a logic level zero. In the case of a positive logic signal, the signal is active high where the logically true state corresponds to a logic level one. Note that any of the signals described herein can be designed as either negative or positive logic signals. Therefore, in alternate embodiments, those signals described as positive logic signals may be implemented as negative logic signals, and those signals described as negative logic signals may be implemented as positive logic signals.

Because the apparatus implementing the present invention is, for the most part, composed of electronic components and circuits known to those skilled in the art, circuit details will not be explained in any greater extent than that considered necessary as illustrated above, for the understanding and appreciation of the underlying concepts of the present invention and in order not to obfuscate or distract from the teachings of the present invention.

Moreover, the terms "front," "back," "top," "bottom," "over," "under" and the like in the description and in the claims, if any, are used for descriptive purposes and not necessarily for describing permanent relative positions. It is understood that the terms so used are interchangeable under appropriate circumstances such that the embodiments of the invention described herein are, for example, capable of operation in other orientations than those illustrated or otherwise described herein.

Those skilled in the art will recognize that the boundaries between logic blocks are merely illustrative and that alternative embodiments may merge logic blocks or circuit elements or impose an alternate decomposition of functionality upon various logic blocks or circuit elements. Furthermore, those skilled in the art will recognize that boundaries between the functionality of the above described operations merely illustrative. The functionality of multiple operations may be combined into a single operation, and/or the functionality of a single operation may be distributed in additional operations. Moreover, alternative embodiments may include multiple instances of a particular operation, and the order of operations may be altered in various other embodiments.

Although the invention is described herein with reference to specific embodiments, various modifications and changes can be made without departing from the scope of the present invention as set forth in the claims below. For example, the "hidden" clock source can be hidden in a variety of different ways other than those examples illustrated herein. Accordingly, the specification and figures are to be regarded in an illustrative rather than a restrictive sense, and all such modifications are intended to be included within the scope of the present invention. Any benefits, advantages, or solutions to problems that are described herein with regard to specific embodiments are not intended to be construed as a critical, required, or essential feature or element of any or all the claims.

The term "coupled," as used herein, is not intended to be limited to a direct coupling or a mechanical coupling.

Furthermore, the terms "a" or "an," as used herein, are defined as one or more than one. Also, the use of introductory phrases such as "at least one" and "one or more" in the claims should not be construed to imply that the introduction of another claim element by the indefinite articles "a" or "an" limits any particular claim containing such introduced claim element to inventions containing only one such element, even when the same claim includes the introductory phrases "one or more" or "at least one" and indefinite articles such as "a" or "an." The same holds true for the use of definite articles.

Unless stated otherwise, terms such as "first" and "second" are used to arbitrarily distinguish between the elements such terms describe. Thus, these terms are not necessarily intended to indicate temporal or other prioritization of such elements.

In a system on a chip (SoC), clock selection circuitry provides a selected one of a first or second clock signal as an output clock based on at least one of a first flag and a second flag. This output clock is provided as a reference clock to one or more phase locked loops (PLLs) of the SoC. The SoC includes a first clock path which receives a first oscillating signal from a first clock source external to the SoC to generate the first clock signal, and a second clock path which receives a second oscillating signal from a second clock source external to the SoC to generate the second clock signal. A first glitch monitor asserts the first flag when a glitch is detected in the first oscillating signal, and a second glitch monitor configured asserts the second flag when a glitch is detected in the second oscillating signal.

The following are various embodiments of the present invention. Note that any of the aspects below can be used in any combination with each other and with any of the disclosed embodiments.

In an embodiment, a packaged system on a chip (SoC) has an SoC mounted onto a package substrate, and the SoC includes a clock selection circuit configured to receive a first clock signal and a second clock signal and provide a selected one of the first or second clock signal as an output clock based on at least one of a first flag and a second flag, wherein the output clock is configured to be provided as a reference clock to one or more phase locked loops (PLLs) for internal circuitry of the SoC; a first clock path configured to receive a first oscillating signal from a first clock source external to the SoC and generate the first clock signal from the first oscillating signal, the first clock path comprising a first glitch monitor configured to assert the first flag when a glitch is detected in the first oscillating signal; and a second clock path configured to receive a second oscillating signal from a second clock source external to the SoC, different from the first clock source, and generate the second clock signal from the second clock source, the second clock path comprising a second glitch monitor configured to assert the second flag when a glitch is detected in the second oscillating signal. In one aspect, the first oscillating signal is received from external the packaged SoC. In a further aspect, the second clock source is within the package substrate of the packaged SoC. In yet a further aspect, the first clock source is characterized as a first crystal and the second clock source is characterized as a second crystal. In another further aspect, the second clock source is mounted on a surface of the package substrate. In yet a further aspect, the packaged substate includes a mold compound surrounding the first clock source and the SoC. In another further aspect, the second oscillating signal is received from external the packaged SoC. In another aspect of the above embodiment, the first clock path includes a first clock control circuit configured to receive and amplify the first oscillating signal; and a first delay circuit configured to delay the amplified first oscillating signal and provide the delayed amplified first oscillating signal as the first clock signal. In a further aspect, the second clock path includes a second clock control circuit configured to receive and amplify the second oscillating signal; a second delay circuit configured to delay the amplified second oscillating signal and provide the delayed amplified second oscillating signal as the second clock signal; and a delay locked loop (DLL) configured to, prior to providing the second clock signal to the clock selecting circuit, align rising and falling edges of the second clock signal to corresponding rising and falling edges of the first clock signal such that the second clock signal matches the first clock signal. In a further aspect, the first glitch monitor includes a third clock control circuit, separate from the first clock control circuit, configured to receive and amplify the first oscillating signal, and a first bandpass filter configured to assert the first flag when a frequency of the first oscillating signal is outside a passband of the first bandpass filter, wherein the passband corresponds to a range of frequencies around an expected frequency of the first clock source, and the second glitch monitor includes a fourth clock control circuit, separate from the second clock control circuit, configured to receive and amplify the second oscillating signal, and a second bandpass filter configured to assert the second flag when a frequency of the second oscillating signal is outside a passband of the second bandpass filter, wherein a passband of the second bandpass filter is a same passband as the passband of the first bandpass filter. In another aspect of the above embodiment, the SoC further includes control circuitry configured to receive the first and second flags and configured to provide a control signal to the clock selection circuit to select one of the first clock signal or the second clock signal as the output clock. In a further aspect, the first clock signal is characterized as a default clock and the second clock signal as an alternate clock, wherein, upon each boot of the SoC, the control circuitry is configured to provide the control signal so that the clock selection circuit initially provides the default clock as the output clock; and when at least one of the first flag or the second flag is asserted, the control circuitry is configured to adjust the control signal so that the clock select circuit instead provides the alternate clock as the output clock, and update a boot attempt counter which tracks a number of boot attempts. In a further aspect, when at least one of the first flag or the second flag is asserted and the boot attempt counter indicates fewer boot attempts than a maximum number of allowed boot attempts, the control circuitry is configured to reboot the SoC. In yet a further aspect, when at least one of the first flag or the second flag is asserted and the boot attempt counter indicates the maximum number of allowed boot attempts has occurred, the control circuitry is configured to perform one or more actions based on which of the first flag or the second flag is asserted.

In another embodiment, in a packaged system on a chip (SoC) having an SoC mounted onto a package substrate, a method includes, upon each boot of the SoC, initially providing a default clock generated from a first oscillating signal to one or more phase locked loops (PLLs) to generate one or more clocks for internal circuitry of the SoC; when at least one of the first flag or the second flag is asserted during boot, instead of providing the default clock, providing an alternate clock generated from a second oscillating signal to the one or more PLLs to generate the one or more clocks for the internal circuitry of the SoC and updating a boot attempt counter to track a number of boot attempts, wherein the SoC is configured to receive a first oscillating signal from a first crystal external to the packaged SoC and a second oscillating signal from a second crystal embedded within the package substrate. In one aspect, the method further includes, when the at least one of the first flag or the second flag is asserted during boot and the boot attempt counter indicates fewer boot attempts than a maximum number of allowed boot attempts, rebooting the SoC wherein upon rebooting, the default clock is again provided to the one or more phase locked loops (PLLs) to generate the one or more clocks for internal circuitry of the SoC. In a further aspect, the method further includes, when the at least one of the first flag or the second flag is asserted during boot and the boot counter indicates the maximum number of allowed boot attempts has occurred, implementing a selected protocol to protect the SoC, wherein the protocol is selected based on which of the first flag or the second flag is asserted. In yet a further aspect, the method further includes, after the boot is completed without the first flag being asserted and without the second flag being asserted, entering normal operation; and, when at least one of the first flag or the second flag is asserted during normal operation, providing the alternate clock instead of the default clock and updating the boot attempt counter to track an additional boot attempt.

In yet another embodiment, a packaged system on a chip (SoC) has an SoC mounted onto a package substrate, and the SoC includes a clock selection circuit configured to receive a first clock signal and a second clock signal and provide a selected one of the first or second clock signal as an output clock based on at least one of a first flag and a second flag, wherein the output clock is configured to be provided as a reference clock to one or more phase locked loops (PLLs) for internal circuitry of the SoC; a first clock control configured to receive and amplify a first oscillating signal from a first crystal located outside the packaged SoC; a first delay circuit configured to delay the amplified first oscillating signal and provide the delayed amplified first oscillating signal as the first clock signal; a second clock control circuit configured to receive and amplify a second oscillating signal from a second crystal embedded in the package substrate; a second delay circuit configured to delay the amplified second oscillating signal and provide the delayed amplified second oscillating signal as the second clock signal; a delay locked loop (DLL) configured to, prior to providing the second clock signal to the clock selecting circuit, align rising and falling edges of the second clock signal to corresponding rising and falling edges of the first clock signal such that the second clock signal matches the first clock signal; a first glitch monitor configured to assert the first flag when a glitch is detect in the first oscillating signal; and a second glitch monitor configured to assert the second flag when a glitch is detect in the second oscillating signal. In one aspect, upon the clock selection circuit changing the output clock from one clock signal of the first and second clock signals to another clock of the first and second clocks signals, the output clock does not experience any phase change.

## Claims

1. A packaged system on a chip (SoC) having an SoC mounted onto a package substrate, the SoC comprising:
a clock selection circuit configured to receive a first clock signal and a second clock signal and provide a selected one of the first or second clock signal as an output clock based on at least one of a first flag and a second flag, wherein the output clock is configured to be provided as a reference clock to one or more phase locked loops (PLLs) for internal circuitry of the SoC;
a first clock path configured to receive a first oscillating signal from a first clock source external to the SoC and generate the first clock signal from the first oscillating signal, the first clock path comprising a first glitch monitor configured to assert the first flag when a glitch is detected in the first oscillating signal; and
a second clock path configured to receive a second oscillating signal from a second clock source external to the SoC, different from the first clock source, and generate the second clock signal from the second clock source, the second clock path comprising a second glitch monitor configured to assert the second flag when a glitch is detected in the second oscillating signal.

2. The packaged SoC of claim 1, wherein the first oscillating signal is received from external the packaged SoC.

3. The packaged SoC of claim 2, wherein the second clock source is within the package substrate of the packaged SoC.

4. The packaged SoC of claim 3, wherein the first clock source is characterized as a first crystal and the second clock source is characterized as a second crystal.

5. The packaged SoC of any of claims 2 to 4, wherein the second clock source is mounted on a surface of the package substrate.

6. The packaged SoC of claim 5, wherein the packaged substate comprises a mold compound surrounding the first clock source and the SoC.

7. The packaged SoC of any of claims 2 to 6, wherein the second oscillating signal is received from external the packaged SoC.

8. The packaged SoC of any preceding claim , wherein the first clock path comprises:
a first clock control circuit configured to receive and amplify the first oscillating signal; and
a first delay circuit configured to delay the amplified first oscillating signal and provide the delayed amplified first oscillating signal as the first clock signal.

9. The packaged SoC of claim 8, wherein the second clock path comprises:
a second clock control circuit configured to receive and amplify the second oscillating signal;
a second delay circuit configured to delay the amplified second oscillating signal and provide the delayed amplified second oscillating signal as the second clock signal; and
a delay locked loop (DLL) configured to, prior to providing the second clock signal to the clock selecting circuit, align rising and falling edges of the second clock signal to corresponding rising and falling edges of the first clock signal such that the second clock signal matches the first clock signal.

10. The packaged SoC of claim 9, wherein:
the first glitch monitor comprises:
a third clock control circuit, separate from the first clock control circuit, configured to receive and amplify the first oscillating signal, and
a first bandpass filter configured to assert the first flag when a frequency of the first oscillating signal is outside a passband of the first bandpass filter, wherein the passband corresponds to a range of frequencies around an expected frequency of the first clock source, and
the second glitch monitor comprises:
a fourth clock control circuit, separate from the second clock control circuit, configured to receive and amplify the second oscillating signal, and
a second bandpass filter configured to assert the second flag when a frequency of the second oscillating signal is outside a passband of the second bandpass filter, wherein a passband of the second bandpass filter is a same passband as the passband of the first bandpass filter.

11. The packaged SoC of any preceding claim, wherein the SoC further comprises control circuitry configured to receive the first and second flags and configured to provide a control signal to the clock selection circuit to select one of the first clock signal or the second clock signal as the output clock.

12. The packaged SoC of claim 11, wherein the first clock signal is characterized as a default clock and the second clock signal as an alternate clock, wherein:
upon each boot of the SoC, the control circuitry is configured to provide the control signal so that the clock selection circuit initially provides the default clock as the output clock; and
when at least one of the first flag or the second flag is asserted, the control circuitry is configured to:
adjust the control signal so that the clock select circuit instead provides the alternate clock as the output clock, and
update a boot attempt counter which tracks a number of boot attempts.

13. The packaged SoC of claim 12, wherein when at least one of the first flag or the second flag is asserted and the boot attempt counter indicates fewer boot attempts than a maximum number of allowed boot attempts, the control circuitry is configured to reboot the SoC.

14. The packaged SoC of claim 13, wherein when at least one of the first flag or the second flag is asserted and the boot attempt counter indicates the maximum number of allowed boot attempts has occurred, the control circuitry is configured to perform one or more actions based on which of the first flag or the second flag is asserted.

15. In a packaged system on a chip (SoC) having an SoC mounted onto a package substrate, a method comprising:
upon each boot of the SoC, initially providing a default clock generated from a first oscillating signal to one or more phase locked loops (PLLs) to generate one or more clocks for internal circuitry of the SoC;
when at least one of the first flag or the second flag is asserted during boot, instead of providing the default clock, providing an alternate clock generated from a second oscillating signal to the one or more PLLs to generate the one or more clocks for the internal circuitry of the SoC and updating a boot attempt counter to track a number of boot attempts, wherein:
the SoC is configured to receive a first oscillating signal from a first crystal external to the packaged SoC and a second oscillating signal from a second crystal embedded within the package substrate.
